# EUROPEAN PATENT APPLICATION

(11) **EP 2 407 877 A1**
(43) Date of publication of application: **18.01.2012**
(21) Application number: 11174022.1
(22) Date of filing: 14.07.2011
(51) Int. Cl.: G06F 9/44, G06F 17/30

(54) **Methods and systems for extensive crawling of web applications**

(30) Priority: 14.07.2010 US 836034
(71) Applicant: FUJITSU LIMITED, Kawasaki-shi, Kanagawa 211-8588 (JP)
(72) Inventor: Rajan, Sreeranga P, Sunnyvale, CA California 94087 (US)
(74) Representative: Wilding, Frances Ward

(57) **Abstract**

In one embodiment, a method may include accessing a particular page of Web application that includes a form having at least one field for entry of data by a user of the Web application, the Web page rendered by the Web application based on code for the Web page. The method may also include analyzing the code. The method may further include generating one or more sets of inputs for the at least one field based on the analysis. The method may additionally include automatically entering, into the at least one field, the one or more sets of inputs. The method may also include automatically submitting the form, including the one or more sets of inputs into the at least one field.

## Description

### TECHNICAL FIELD

This disclosure relates generally to validating Web applications.

### BACKGROUND

With computer-based applications in high demand, and particularly Web applications designed for use in connection with the World Wide Web, the importance of the quality assurance process is ever-increasing. Applications, and Web applications in particular, are difficult to test because the set of all possible user inputs allowed by the interface of an application can be very large. Previously known methods of validating Web applications specify checks on Web application artifacts, such as, for example, screens, buttons, links, and form fields by directly referring to the underlying implementation of the artifact. This typically requires some knowledge of the underlying implementation of the Web application. In contrast, system-level (end-to-end) Web application test engineers, who do not have knowledge about the underlying implementation of the Web application, typically manually exercise use-case test scenarios on a Web application, one by one, by visually observing artifacts presented with the deployed Web application and "firing" events at these artifacts. As an example, firing events at artifacts may include clicking, as for example with a mouse or other input device, on buttons and links, or entering data into forms displayed in a user interface, such as a Web browser displaying a rendered instance of the Web application. This conventional mode of testing precludes the use of any automated testing or validation techniques since an automated tool or technique requires implementation (i.e., code-level) references to the Web application artifacts being tested.

With respect Web applications including forms, the problem of automating testing of an application is further complicated by the fact that in order to exhaustively test the Web application, numerous different sets of form input data may be needed. Thus, not only do traditional validation techniques require manual entry of data into such forms, but may also require such manual entry to be repeated over and over again in order to provide for exhaustive testing. In addition, complex input validation code may exist in the Web application that checks the entered data to ensure that it matches certain restraints, which may also frustrate efficient and exhaustive testing. For instance, a constraint for a username may be that the username must be of a length between 6 and 15 characters, must not contain non-alphanumeric characters, must have at least one capital letter, and at least one number.

### SUMMARY

The invention is defined in the independent claims, to which reference should now be made. Advantageous embodiments are set out in the sub claims.

Features and sub features of each of the aspects may be applied to any of the other aspects.
According to one aspect there is provided a method comprising accessing a particular page of Web application that includes a form having at least one field for entry of data by a user of the Web application, the Web page rendered by the Web application based on code for the Web page; analyzing the code; generating one or more sets of inputs for the at least one field based on the analysis; automatically entering, into the at least one field, the one or more sets of inputs; and automatically submitting the form, including the one or more sets of inputs into the at least one field. According to another aspect there is provided one or more computer-readable storage media encoding software that is operable when executed to access a particular page of Web application that includes a form having at least one field for entry of data by a user of the Web application, the Web page rendered by the Web application based on code for the Web page; analyze the code; generate one or more sets of inputs for the at least one field based on the analysis; automatically enter, into the at least one field, the one or more sets of inputs; and automatically submit the form, including the one or more sets of inputs into the at least one field. According to a further aspect there is provided a system for crawling a Web application, comprising a crawler having one or more code analysis engines configured to access a particular page of Web application that includes a form having at least one field for entry of data by a user of the Web application, the Web page rendered by the Web application based on code for the Web page; analyze the code; generate one or more sets of inputs for the at least one field based on the analysis; automatically enter, into the at least one field, the one or more sets of inputs; and automatically submit the form, including the one or more sets of inputs into the at least one field.

Preferably the one or more code analysis engines is configured to, when executed, access the particular page multiple times and input a different set of the one or more sets of inputs for each access. Preferably the one or more code analysis engines is configured to crawl the Web application to generate a navigation model of the Web application. Preferably analyzing the codes includes determining a type of data requested for the at least one field; and generating one or more sets of inputs for the at least one field includes generating data based on the determined type of data. Preferably the one or more code analysis engines is configured to analyze the code to determine a static string that displays adjacent to the at least one field when the Web page is rendered to a display in order to determine the type of data requested for the at least one field. Preferably, analyzing the code includes analyzing input constraints for data entered into the at least one field; and generating one or more sets of inputs for the at least one field includes generating data based on the input constraints.

All these preferable sub-features correspond to sub-features of the method and program aspects.

Embodiments of the present invention provide software, a method and a system for exhaustive crawling of Web applications that substantially eliminates or reduces at least some of the disadvantages and problems associated with previous methods and systems.

In accordance with a particular embodiment of the present invention, a method may include accessing a particular page of Web application that includes a form having at least one field for entry of data by a user of the Web application, the Web page rendered by the Web application based on code for the Web page. The method may also include analyzing the code. The method may further include generating one or more sets of inputs for the at least one field based on the analysis. The method may additionally include automatically entering, into the at least one field, the one or more sets of inputs. The method may also include automatically submitting the form, including the one or more sets of inputs into the at least one field.

Technical advantages of particular embodiments of the present invention include a methodology whereby Web applications may be extensive crawled to reveal behavior that may not be uncovered by traditional crawlers.

Other technical advantages will be readily apparent to one skilled in the art from the following figures, descriptions, and claims. Moreover, while specific advantages have been enumerated above, various embodiments may include all, some or none of the enumerated advantages.

### BRIEF DESCRIPTION OF THE DRAWINGS

Preferred features of the present invention will now be described, purely by way of example, with reference to the accompanying drawings, in which:-

FIGURE 1 illustrates an example environment of an example system for validating Web applications, in accordance with embodiments of the present disclosure.

FIGURE 2 illustrates an example Web browser display including an example interactive form, in accordance with embodiments of the present disclosure.

FIGURE 3 illustrates an example system for validating Web applications, in accordance with the present disclosure.

FIGURE 4 illustrates selected components of a Web application crawler, in accordance with the present disclosure.

FIGURE 5 illustrates a flowchart illustrating an example method for validating Web applications, in accordance with the present disclosure.

FIGURE 6 illustrates an example computer system, in accordance with the present disclosure.

### DETAILED DESCRIPTION

Particular embodiments relate to validating Web applications, and particularly, Web 2.0 applications. Web 2.0 applications may generally refer to dynamic or interactive Web applications that facilitate interactive information sharing, interoperability, user-centered design, or collaboration via the World Wide Web or other suitable or appropriate network environment. Web applications, and Web 2.0 applications in particular, often take the form of, utilize, or are characterized by a number of widgets. A widget may generally refer to a stand-alone application or portable chunk of code that can be installed and executed within a separate renderable structured document, such as, for example, a Hyper Text Markup Language (HTML)-based web page, or otherwise embedded into a third party site by a user on a page where such user has rights of authorship (e.g. a webpage, blog, or profile on a social media site). Examples of Web 2.0 applications may operate in conjunction with web-based communities, hosted services, social-networking sites, video-sharing sites, or wikis, among other possibilities.

Particular embodiments relate to analyzing underlying code related to a rendered page of Web application wherein such rendered page includes a form for input of data by a user of the Web application (e.g., analysis using static analysis techniques), and based on such analysis, generating sets of form data inputs that a crawler may automatically input into the form in an effort to perform extensive web crawling.

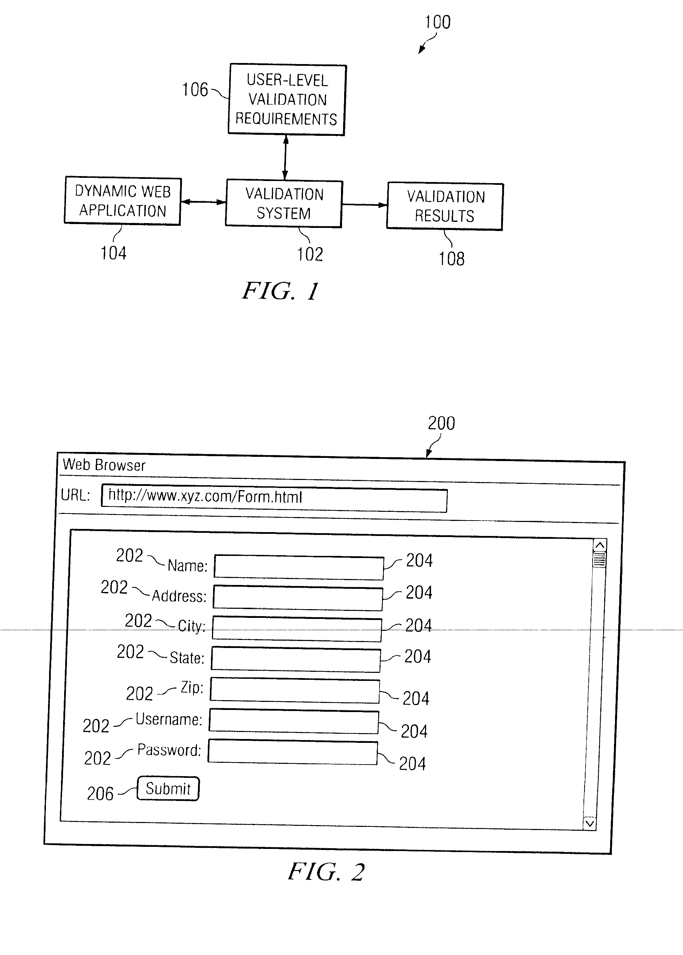

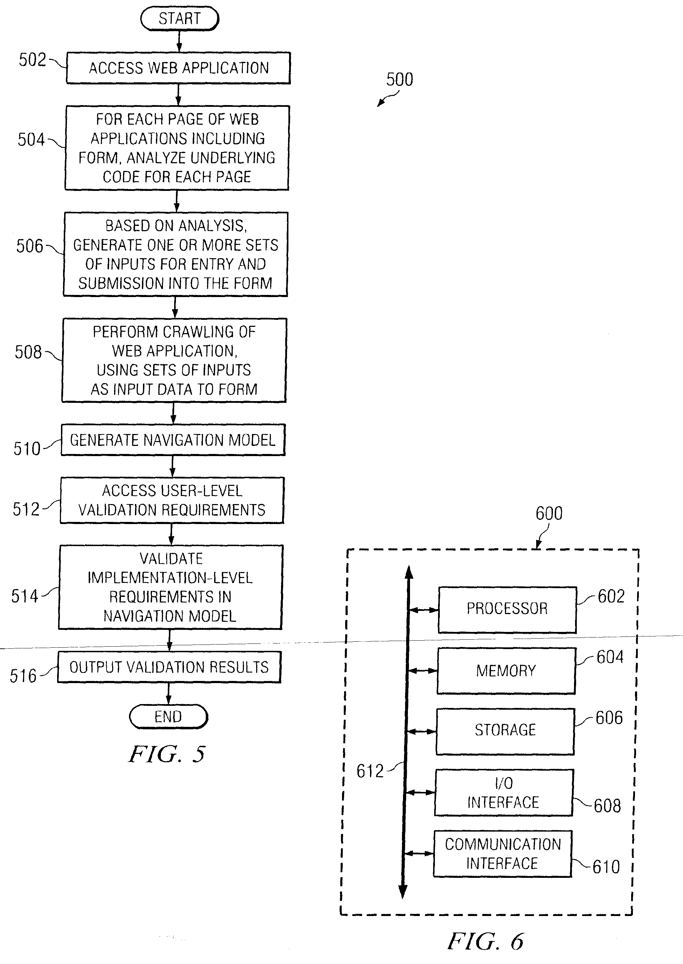

FIGURE 1 illustrates an example environment 100 of an example validation system 102. Validation system 102 may include one or more hardware components, one or more software components, or a combination of hardware and software components. Components of validation system 102 may execute or operate within one or more computer systems, such as those described in more detail below with reference to FIGURE 6. Validation system 102 is configured to access Web application 104. In particular embodiments, Web application 104 is deployed, at least in part, at the same computer system(s) as validation system 102. In an alternate embodiment, Web application 104 may be deployed at one or more separate computer systems that are connected or coupled either directly or indirectly with the computer system(s) hosting validation system 102. Web application 104 may also be hosted, at least in part, at one or more external or third party servers or computing systems.

Generally, a Web application is an application that may be accessed via a Web browser (e.g., MICROSOFT WINDOWS INTERNET EXPLORER, MOZILLA FIREFOX, APPLE SAFARI, GOOGLE CHROME, or OPERA) or other client application over a network, or a computer software application that is coded in a Web browser-supported language and sometimes reliant on a Web browser to render the application executable. Web applications have gained popularity largely as a result of the ubiquity of Web browsers, the convenience of using a Web browser launched at a remote computing device as a client (sometimes referred to as a thin client), and the corresponding ability to update and maintain Web applications without necessarily distributing and installing software on remote clients. Often, to implement a Web application, the Web application requires access to one or more resources provided at a backend server of an associated Website. Additionally, Web applications may often require access to additional resources associated with other applications.

A Web application deployed with or at an end-user's machine (client device) may cause a Web page to be rendered on a display of the end-user's machine. Web applications that execute in conjunction with or in the context of a Web browser may cause the Web browser to render a Web page on the display. Web pages of Web applications typically include embedded links to other Web pages of the Web application as well as to Web pages and Websites external to or not affiliated with the Web application. Dynamic Web applications in particular often include a plurality of embedded links which may be rendered on the currently viewed Web page as a hyperlink, icon, or other "clickable" feature. Typical dynamic Web applications may include a plurality of resources located at the server(s) hosting the Web applications or retrieved from external third party servers. A Web page or resource for rendering a Web page, which may themselves include multiple embedded resources, may include data records, such as content plain textual information, or more complex digitally encoded multimedia content, such as software programs or other code objects, graphics, images, audio signals, videos, and so forth. One prevalent markup language for creating Web pages is the Hypertext Markup Language (HTML). Other common Web browser-supported languages and technologies include the Extensible Markup Language (XML), the Extensible Hypertext Markup Language (XHTML), JavaScript, Cascading Style Sheet (CSS), and JAVA, among others. By way of example, HTML enables an application or Web page developer to create a structured document by denoting structural semantics for text and links, as well as images, Web applications and other objects (e.g., form fields) that can be embedded within the page. Generally, a Web page may be delivered to a client as a static structured document, however, through the use of Web elements embedded in the page, an interactive experience may be achieved with the page or a sequence of pages. During a user session at the client device, the Web browser interprets and displays the pages and associated resources received or retrieved from the Web application or Website hosting the Web page, as well as, potentially, resources from other Websites. By way of example, upon receipt of an HTML structured document by a Web browser, the Web browser may execute embedded calls including JavaScript code segments, which then call or request resources from third party hosts or Websites.

In particular embodiments, validation system 102 is configured to access Web application 104 over a network, such as, for example, an intranet, an extranet, a virtual private network (VPN), a local area network (LAN), a wireless LAN (WLAN), a wide area network (WAN), a metropolitan area network (MAN), a portion of the World Wide Web (Internet), or another network or combination of two or more such networks. The present disclosure contemplates any suitable network through which Web application 104 may be deployed in conjunction with validation system 102. In particular embodiments, validation system 102 initiates a session with one or more servers hosting Web application 104 by transmitting a request for Web application 104 to these hosting servers, such as, for example,
in the form of an HTTP request. In particular embodiments, in response to receiving the request, the server hosting Web application 104 proceeds to generate a renderable implementation of Web application 104 in the form of an HTML or other structured document including structured document code and the content to be displayed as well as any embedded resources, or embedded calls and identifiers for the resources, for rendering the web page at or by validation system 102.

Often, a Web browser may read code segments written in one or more languages related to the display of interactive form fields, and may render and display interactive form fields based on such code segments. An example of such an interactive form displayed in a Web browser window is depicted in FIGURE 2. As shown in FIGURE 2, a Web browser window 200 may display a form including static strings 202, fields 204 and a submit button 206. Static strings 202 may include text displayed to a user of a Web browser to indicate the type of data the user is to enter into an adjacent field 204. Each field 204 may be a user interface element that allows a user of the Web browser to enter data into such field 204 (e.g., by use of a keyboard). After entering data into fields 204, a user may click on submit button 206 (or perform another action indicative of the user's desire to submit data), and the Web browser may then communicate such data to a server (e.g., server(s) hosting the Web applications). In some instances, the interactive form code may also include client-side validation code that places constraints on the data entered in fields 204. For example, a constraint may place a limit on the minimum and maximum length of a field associated with username and/or place limits on the types of characters that may be entered into the field.

In particular embodiments, validation system 102 further has access to user-level validation requirements 106 for use in validating Web application 104. In particular embodiments, user-level validation requirements 106 include natural language references to various web artifacts of Web application 104, rather than implementation-level details of these Web artifacts. In particular embodiments, a validation requirement 106 may be a test case for Web application 104. A test case may include a typical scenario of exercising Web application 104, such as a specific sequence of steps performed by a user of the Web application, as well as some explicit or implicit specification of what constitutes correct or valid behavior of the Web application under the scenario. Simply put, a test case may be considered a use case in combination with a correctness check (e.g., an expected result or outcome). In other embodiments, a validation requirement 106 may be a more expressive representation of the expected behavior of Web application 104, and written in a formalism such as, for example, temporal logic. Validation results 108 are output from validation system 102 as a result of validating one or more validation requirements 106 or other test or use cases on Web application 104.

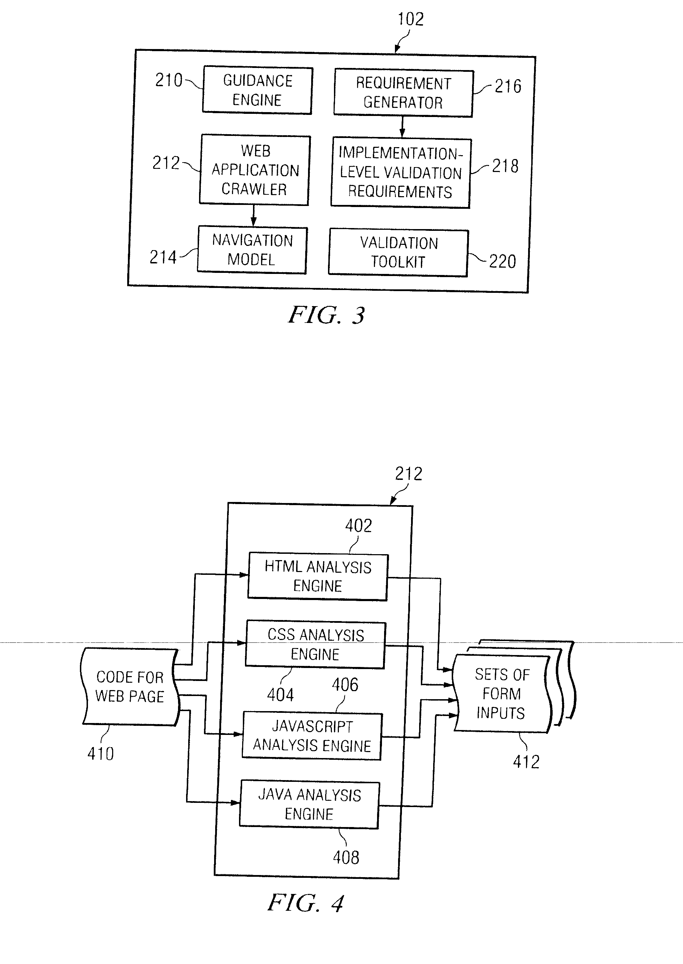

As illustrated more particularly in FIGURE 3, validation system 102 may include guidance engine 210, Web application crawler 212, requirement generator 216, and validation toolkit 220. In particular embodiments, with the aid of guidance engine 210, crawler 212 accesses and crawls Web application 104 and outputs a navigation model 214. In particular embodiments, requirement generator 216 generates implementation-level validation requirements 218 based at least in part on user-level validation requirements 106; that is, requirement generator 216 may take as input property or test case expressions expressed in a natural language representation as described herein and generate computer- or machine-readable instructions (implementation-level validation requirements 218) that are input to validation toolkit 220, which is configured to read the computer-readable validation requirements 218. In particular embodiments, validation toolkit 220 is configured to validate Web application 104 using navigation model 214 in conjunction with implementation-level validation requirements 218 and, subsequently, output validation results 108. More particularly, validation toolkit 220 may be configured to take as input navigation model 214 and implementation-level validation requirements 218 and check validation requirements 218 against navigation model 214 to validate Web application 104. For example, validation results 108 may include one or more results, tables, or graphs, stored in a memory of validation system 102 or elsewhere, and which provide an objective evaluation of Web application 104, including whether or not each of the validation requirements 218 were satisfied or more generally whether one or more navigational or business logic properties or requirements were satisfied. Additionally, in some embodiments, requirement generator 216 may take as input natural language mappings of Web artifacts as described herein, generate use or test cases in the form of natural language representation expressions as described herein using the mappings of the Web artifacts, and then generate implementation-level validation requirements 218 based on the generated expressions.

FIGURE 4 illustrates selected components of Web application crawler 212, in accordance with the present disclosure. As shown in FIGURE 4, Web application crawler 212 may include one or more analysis engines (e.g., HTML analysis engine 402, CSS analysis engine 404, Javascript analysis engine 406, and JAVA analysis engine 408). Each analysis engine may be configured to analyze underlying code of a particular language relating to a rendered Web page that includes a form (e.g., HTML analysis engine 402 may analyze HTML, CSS analysis engine 404 may analyze CSS, etc.). Based on such analyses, the analysis engines may, individually or in concert, generate sets of inputs 412 that Web application crawler 212 may automatically enter into form fields.

The sets of inputs 412 may be generated in any suitable manner. For example, based on analyses of underlying code, analysis engines may, individually or in concert, determine a type of input requested for one or more form fields. To illustrate, referencing FIGURE 2, analysis engines may determine based on analyses that, as displayed to user of a Web application, a particular field 204 is adjacent to a particular static string 202 (e.g., the static string "Name:" is adjacent to a particular field 204). Such adjacency to a static string 202 may indicate the type of data to be input to a field 204 (e.g., adjacency to "Name:" may indicate that a name is requested in a particular field 204, adjacency to "Zip:" may indicate that a zip code is requested in a particular field 204). Accordingly, based on the types of input requested for the one or more form fields, analysis engines may, individually or in concert, generate sets of inputs 412 consistent with such types of input (e.g., generate a plurality of names for the field adjacent to "Name," generate a plurality of zip codes for the field adjacent to "zip").

Each set of inputs 412 may include a set of data including an input for one or more fields of the form. For example, a single set of inputs 412 for the form depicted in FIGURE 2 may include a name, address, city, state, zip code, username, and password.

In some instances, behavior of a Web application may depend on the variables input into forms. Thus, to provide for extensive crawling that exposes as much of the behavior of the Web application as possible, many different sets of inputs 412 with varying data may be generated. In certain embodiments, one or more of the generated sets of inputs 412 may include inconsistent data in order to expose error handling behavior of the Web application. For example, a particular set of inputs 412 may include a city/state combination that is inconsistent with the zip code from the particular set (e.g., includes a city/state combination of San Jose, California, but also includes a zip code of Austin, Texas) thus exposing behavior (if any) of a Web application for handling such inconsistency.

Sets of inputs 412 may be generated in any suitable manner. In some embodiments, sets of inputs 412 may include data included in a database accessible to Web application crawler 212. For example, such database may include an index of names, addresses and other data, and may retrieve names for fields with a name as its type of input, may retrieve addresses for fields with an address as its type of input, and so on.

In addition to the foregoing, analysis engines may also generate data based on constraints placed on form fields (e.g., constraints established by client-side verification code). Such constraints may limit data entered into various fields. For example, constraints may limit data entered into a particular field to a certain string length and/or allow particular characters (e.g., for field for which a zip code is to be entered, constraints may limit field input to five numeric characters). Accordingly, some sets of inputs 412 may include data compliant with such constraints, and other sets of inputs may include data non-compliant with such constraints, in order to expose behavior of the Web application in handling both constraint-compliant input strings and non-compliant input strings.

FIGURE 5 illustrates a flowchart of an example method 500 for validating Web applications, in accordance with the present disclosure. Method 500 may generally begin at 502 with Web application crawler 212 accessing Web application 104. Web application crawler 212 may access Web application 104 by reading code (e.g., JavaScript, HTML, etc.) for the web application. At step 504, for each particular page of Web application 104 that includes a form, crawler 212 may analyze the underlying code for such page.

After or concurrently with step 504, method 500 may proceed to step 506 in which crawler 212 may, based on the analysis of the underlying code for each form, generate one or more sets of inputs 412 for entry and submission into such form. As described above, in some embodiments such sets of inputs 412 may be created based on the types of data requested by the form and/or constraints on data entered into the form.

After or concurrently with steps 504 and 506, method 500 may proceed to step 508 wherein crawler 212 crawls Web application 104, using generated sets of inputs 412 as input data to the form. For example, in crawling Web application 104, crawler 212 may access a particular page having a form multiple times and input a different set of inputs 412 for each access. Based on the crawling, crawler 212 may generate at step 510 a navigation (behavioral) model 214. As illustrated in FIGURE 2, crawler 212 may receive input such as guidance instructions, parameters, and other information from guidance engine 210 for use by crawler 212 in crawling Web application 104. Before, after, or concurrently with the foregoing steps, validation toolkit 220 may at step 512 access user-level validation requirements. In some embodiments, requirement generator 216, itself, accesses the Web application 104 or crawled Web application 104, and automatically generates the user-level validation requirements (e.g. test cases or properties with natural language representations of web artifacts) that include the natural language mappings to various Web artifacts of Web application 104.

In particular embodiments, navigation model 214 is a compact mathematical model or representation of the behavior of Web application 104 and, in particular embodiments, the client-tier of Web application 104. In one embodiment, navigation model 214 is formatted in XML and subsequently stored as an XML document or file by validation toolkit 220. Validation toolkit 220 may then use the navigation model 214 and validation requirements 218 to automatically and without run-time user input validate Web application 104 by, for example, checking validation requirements 218 against navigation model 214 at step 514. Validation toolkit 220 may then output validation results at 516. Validation results 108 may include, for example, one or more results, tables, or graphs, stored in a memory of validation system 102 or elsewhere, and which provide an objective evaluation of Web application 104, including whether or not each of the validation requirements 218 were satisfied or more generally whether one or more navigational or business logic properties or requirements were satisfied.

Advantageously, the methods and systems described above enable validation systems for Web applications to automatically enter form data, thus relieving the necessity of human intervention for entering form data.

FIGURE 6 illustrates an example computer system 600, in accordance with embodiments of the present disclosure. In particular embodiments, one or more computer systems 600 perform one or more steps of one or more methods described or illustrated herein. In particular embodiments, one or more computer systems 600 provide functionality described or illustrated herein. In particular embodiments, software running on one or more computer systems 600 performs one or more steps of one or more methods described or illustrated herein or provides functionality described or illustrated herein. Particular embodiments include one or more portions of one or more computer systems 600.

This disclosure contemplates any suitable number of computer systems 600. This disclosure contemplates computer system 600 taking any suitable physical form. As example and not by way of limitation, computer system 600 may be an embedded computer system, a system-on-chip (SOC), a single-board computer system (SBC) (such as, for example, a computer-on-module (COM) or system-on-module (SOM)), a desktop computer system, a laptop or notebook computer system, an interactive kiosk, a mainframe, a mesh of computer systems, a mobile telephone, a personal digital assistant (PDA), a server, or a combination of two or more of these. Where appropriate, computer system 600 may include one or more computer systems 600; be unitary or distributed; span multiple locations; span multiple machines; or reside in a cloud, which may include one or more cloud components in one or more networks. Where appropriate, one or more computer systems 600 may perform without substantial spatial or temporal limitation one or more steps of one or more methods described or illustrated herein. As an example and not by way of limitation, one or more computer systems 600 may perform in real time or in batch mode one or more steps of one or more methods described or illustrated herein. One or more computer systems 600 may perform at different times or at different locations one or more steps of one or more methods described or illustrated herein, where appropriate.

In particular embodiments, computer system 600 includes a processor 602, memory 604, storage 606, an input/output (I/O) interface 608, a communication interface 610, and a bus 612. Although this disclosure describes and illustrates a particular computer system having a particular number of particular components in a particular arrangement, this disclosure contemplates any suitable computer system having any suitable number of any suitable components in any suitable arrangement.

In particular embodiments, processor 602 includes hardware for executing instructions, such as those making up a computer program. As an example and not by way of limitation, to execute instructions, processor 602 may retrieve (or fetch) the instructions from an internal register, an internal cache, memory 604, or storage 606; decode and execute them; and then write one or more results to an internal register, an internal cache, memory 604, or storage 606. In particular embodiments, processor 602 may include one or more internal caches for data, instructions, or addresses. The present disclosure contemplates processor 602 including any suitable number of any suitable internal caches, where appropriate. As an example and not by way of limitation, processor 602 may include one or more instruction caches, one or more data caches, and one or more translation lookaside buffers (TLBs). Instructions in the instruction caches may be copies of instructions in memory 604 or storage 606, and the instruction caches may speed up retrieval of those instructions by processor 602. Data in the data caches may be copies of data in memory 604 or storage 606 for instructions executing at processor 602 to operate on; the results of previous instructions executed at processor 602 for access by subsequent instructions executing at processor 602 or for writing to memory 604 or storage 606; or other suitable data. The data caches may speed up read or write operations by processor 602. The TLBs may speed up virtual-address translation for processor 602. In particular embodiments, processor 602 may include one or more internal registers for data, instructions, or addresses. The present disclosure contemplates processor 602 including any suitable number of any suitable internal registers, where appropriate. Where appropriate, processor 602 may include one or more arithmetic logic units (ALUs); be a multi-core processor; or include one or more processors 602. Although this disclosure describes and illustrates a particular processor, this disclosure contemplates any suitable processor.

In particular embodiments, memory 604 includes main memory for storing instructions for processor 602 to execute or data for processor 602 to operate on. As an example and not by way of limitation, computer system 600 may load instructions from storage 606 or another source (such as, for example, another computer system 600) to memory 604. Processor 602 may then load the instructions from memory 604 to an internal register or internal cache. To execute the instructions, processor 602 may retrieve the instructions from the internal register or internal cache and decode them. During or after execution of the instructions, processor 602 may write one or more results (which may be intermediate or final results) to the internal register or internal cache. Processor 602 may then write one or more of those results to memory 604. In particular embodiments, processor 602 executes only instructions in one or more internal registers or internal caches or in memory 604 (as opposed to storage 606 or elsewhere) and operates only on data in one or more internal registers or internal caches or in memory 604 (as opposed to storage 606 or elsewhere). One or more memory buses (which may each include an address bus and a data bus) may couple processor 602 to memory 604. Bus 612 may include one or more memory buses, as described below. In particular embodiments, one or more memory management units (MMUs) reside between processor 602 and memory 604 and facilitate accesses to memory 604 requested by processor 602. In particular embodiments, memory 604 includes random access memory (RAM). This RAM may be volatile memory, where appropriate Where appropriate, this RAM may be dynamic RAM (DRAM) or static RAM (SRAM). Moreover, where appropriate, this RAM may be single-ported or multi-ported RAM. The present disclosure contemplates any suitable RAM. Memory 604 may include one or more memories 604, where appropriate. Although this disclosure describes and illustrates particular memory, this disclosure contemplates any suitable memory.

In particular embodiments, storage 606 includes mass storage for data or instructions. As an example and not by way of limitation, storage 606 may include an HDD, a floppy disk drive, flash memory, an optical disc, a magneto-optical disc, magnetic tape, or a Universal Serial Bus (USB) drive or a combination of two or more of these. Storage 606 may include removable or non-removable (or fixed) media, where appropriate. Storage 606 may be internal or external to computer system 600, where appropriate. In particular embodiments, storage 606 is non-volatile, solid-state memory. In particular embodiments, storage 606 includes read-only memory (ROM). Where appropriate, this ROM may be mask-programmed ROM, programmable ROM (PROM), erasable PROM (EPROM), electrically erasable PROM (EEPROM), electrically alterable ROM (EAROM), or flash memory or a combination of two or more of these. This disclosure contemplates mass storage 606 taking any suitable physical form. Storage 606 may include one or more storage control units facilitating communication between processor 602 and storage 606, where appropriate. Where appropriate, storage 606 may include one or more storages 606. Although this disclosure describes and illustrates particular storage, this disclosure contemplates any suitable storage.

In particular embodiments, I/O interface 608 includes hardware, software, or both providing one or more interfaces for communication between computer system 600 and one or more I/O devices. Computer system 600 may include one or more of these I/O devices, where appropriate. One or more of these I/O devices may enable communication between a person and computer system 600. As an example and not by way of limitation, an I/O device may include a keyboard, keypad, microphone, monitor, mouse, printer, scanner, speaker, still camera, stylus, tablet, touchscreen, trackball, video camera, another suitable I/O device or a combination of two or more of these. An I/O device may include one or more sensors. This disclosure contemplates any suitable I/O devices and any suitable I/O interfaces 608 for them. Where appropriate, I/O interface 608 may include one or more device or software drivers enabling processor 602 to drive one or more of these I/O devices. I/O interface 608 may include one or more I/O interfaces 608, where appropriate. Although this disclosure describes and illustrates a particular I/O interface, this disclosure contemplates any suitable I/O interface.

In particular embodiments, communication interface 610 includes hardware, software, or both providing one or more interfaces for communication (such as, for example, packet-based communication) between computer system 600 and one or more other computer systems 600 or one or more networks. As an example and not by way of limitation, communication interface 610 may include a network interface controller (NIC) or network adapter for communicating with an Ethernet or other wire-based network or a wireless NIC (WNIC) or wireless adapter for communicating with a wireless network, such as a WI-FI network. This disclosure contemplates any suitable network and any suitable communication interface 610 for it. As an example and not by way of limitation, computer system 600 may communicate with an ad hoc network, a personal area network (PAN), a local area network (LAN), a wide area network (WAN), a metropolitan area network (MAN), or one or more portions of the Internet or a combination of two or more of these. One or more portions of one or more of these networks may be wired or wireless. As an example, computer system 600 may communicate with a wireless PAN (WPAN) (such as, for example, a BLUETOOTH WPAN), a WI-FI network, a WI-MAX network, a cellular telephone network (such as, for example, a Global System for Mobile Communications (GSM) network), or other suitable wireless network or a combination of two or more of these. Computer system 600 may include any suitable communication interface 610 for any of these networks, where appropriate. Communication interface 610 may include one or more communication interfaces 610, where appropriate. Although this disclosure describes and illustrates a particular communication interface, this disclosure contemplates any suitable communication interface.

In particular embodiments, bus 612 includes hardware, software, or both coupling components of computer system 600 to each other. As an example and not by way of limitation, bus 612 may include an Accelerated Graphics Port (AGP) or other graphics bus, an Enhanced Industry Standard Architecture (EISA) bus, a front-side bus (FSB), a HYPERTRANSPORT (HT) interconnect, an Industry Standard Architecture (ISA) bus, an INFINIBAND interconnect, a low-pin-count (LPC) bus, a memory bus, a Micro Channel Architecture (MCA) bus, a Peripheral Component Interconnect (PCI) bus, a PCI-Express (PCI-X) bus, a serial advanced technology attachment (SATA) bus, a Video Electronics Standards Association local (VLB) bus, or another suitable bus or a combination of two or more of these. Bus 612 may include one or more buses 612, where appropriate. Although this disclosure describes and illustrates a particular bus, this disclosure contemplates any suitable bus or interconnect.

Particular embodiments relate to software (one or more computer programs) which may be stored on one or more computer-readable storage media. Herein, reference to a computer-readable storage medium encompasses one or more tangible computer-readable storage media possessing structure. As an example and not by way of limitation, a computer-readable storage medium may include a semiconductor-based or other integrated circuit (IC) (such, as for example, a field-programmable gate array (FPGA) or an application-specific IC (ASIC)), a hard disk, an HDD, a hybrid hard drive (HHD), an optical disc, an optical disc drive (ODD), a magneto-optical disc, a magneto-optical drive, a floppy disk, a floppy disk drive (FDD), magnetic tape, a holographic storage medium, a solid-state drive (SSD), a RAM-drive, a SECURE DIGITAL card, a SECURE DIGITAL drive, or another suitable computer-readable storage medium or a combination of two or more of these, where appropriate. Herein, reference to a computer-readable storage medium excludes any medium that is not eligible for patent protection under 35 U.S.C. § 101. Herein, reference to a computer-readable storage medium excludes transitory forms of signal transmission (such as a propagating electrical or electromagnetic signal *per se)* to the extent that they are not eligible for patent protection under 35 U.S.C. § 101.

This disclosure contemplates one or more computer-readable storage media implementing any suitable storage. In particular embodiments, a computer-readable storage medium implements one or more portions of processor 602 (such as, for example, one or more internal registers or caches), one or more portions of memory 604, one or more portions of storage 606, or a combination of these, where appropriate. In particular embodiments, a computer-readable storage medium implements RAM or ROM. In particular embodiments, a computer-readable storage medium implements volatile or persistent memory. In particular embodiments, one or more computer-readable storage media embody software. Herein, reference to software may encompass one or more applications, bytecode, one or more computer programs, one or more executables, one or more instructions, logic, machine code, one or more scripts, or source code, and vice versa, where appropriate. In particular embodiments, software includes one or more application programming interfaces (APIs). This disclosure contemplates any suitable software written or otherwise expressed in any suitable programming language or combination of programming languages. In particular embodiments, software is expressed as source code or object code. In particular embodiments, software is expressed in a higher-level programming language, such as, for example, C, Perl, or a suitable extension thereof. In particular embodiments, software is expressed in a lower-level programming language, such as assembly language (or machine code). In particular embodiments, software is expressed in JAVA. In particular embodiments, software is expressed in Hyper Text Markup Language (HTML), Extensible Markup Language (XML), or other suitable markup language.

The present disclosure encompasses all changes, substitutions, variations, alterations, and modifications to the example embodiments herein that a person having ordinary skill in the art would comprehend. Similarly, where appropriate, the appended claims encompass all changes, substitutions, variations, alterations, and modifications to the example embodiments herein that a person having ordinary skill in the art would comprehend.

## Claims

1. A method comprising:
accessing a particular page of Web application that includes a form having at least one field for entry of data by a user of the Web application, the Web page rendered by the Web application based on code for the Web page;
analyzing the code;
generating one or more sets of inputs for the at least one field based on the analysis;
automatically entering, into the at least one field, the one or more sets of inputs; and
automatically submitting the form, including the one or more sets of inputs into the at least one field.

2. A method according to Claim 1, further comprising accessing the particular page multiple times and inputting a different set of the one or more sets of inputs for each access.

3. A method according to Claim 1 or 2, further comprising crawling the Web application to generate a navigation model of the Web application.

4. A method according to any of the preceding claims, wherein:
analyzing the code includes determining a type of data requested for the at least one field; and
generating one or more sets of inputs for the at least one field includes generating data based on the determined type of data.

5. A method according to Claim 4, wherein determining the type of data requested for the at least one field includes analyzing the code to determine a static string that displays adjacent to the at least one field when the Web page is rendered to a display.

6. A method according toany of the preceding claims, wherein:
analyzing the code includes analyzing input constraints for data entered into the at least one field; and
generating one or more sets of inputs for the at least one field includes generating data based on the input constraints.

7. Software that is operable when executed to:
access a particular page of Web application that includes a form having at least one field for entry of data by a user of the Web application, the Web page rendered by the Web application based on code for the Web page;
analyze the code;
generate one or more sets of inputs for the at least one field based on the analysis;
automatically enter, into the at least one field, the one or more sets of inputs; and
automatically submit the form, including the one or more sets of inputs into the at least one field.

8. Software according to Claim 7, wherein the software is further operable to, when executed, access the particular page multiple times and input a different set of the one or more sets of inputs for each access.

9. Software according to Claim 7 or 8, wherein the software further operable to, when executed, crawl the Web application to generate a navigation model of the Web application.

10. Software according to any of the preceding claims, wherein:
analyzing the code includes determining a type of data requested for the at least one field; and
generating one or more sets of inputs for the at least one field includes generating data based on the determined type of data.

11. Software according to Claim 10, wherein the software is further operable to, when executed, analyzing the code to determine a static string that displays adjacent to the at least one field when the Web page is rendered to a display in order to determine the type of data requested for the at least one field.

12. Software according to any of the preceding claims, wherein:
analyzing the code includes analyzing input constraints for data entered into the at least one field; and
generating one or more sets of inputs for the at least one field includes generating data based on the input constraints.

13. Software according to any of the preceding claims, wherein analyzing the code includes at least one of:
analyzing portions of the code written in Hypertext Markup Language;
analyzing portions of the code written in Cascading Style Sheets;
analyzing portions of the code written in Javascript; and
analyzing portions of the code written in JAVA.

14. A system for crawling a Web application, comprising a crawler having one or more code analysis engines configured to:
access a particular page of Web application that includes a form having at least one field for entry of data by a user of the Web application, the Web page rendered by the Web application based on code for the Web page;
analyze the code;
generate one or more sets of inputs for the at least one field based on the analysis;
automatically enter, into the at least one field, the one or more sets of inputs; and
automatically submit the form, including the one or more sets of inputs into the at least one field.

15. A system according to Claim 14, wherein the one or more code analysis engines includes at least one of:
a Hypertext Markup Language analysis engine for analyzing portions of the code written in Hypertext Markup Language;
a Cascading Style Sheets analysis engine for analyzing portions of the code written in Cascading Style Sheets;
a Javascript analysis engine for analyzing portions of the code written in Javascript;
and
a JAVA analysis engine for analyzing portions of the code written in JAVA.
